# EUROPEAN PATENT SPECIFICATION

(11) **EP 4 277 249 B1**
(45) Date of publication and mention of the grant of the patent: **05.11.2025**
(21) Application number: 23739839.1
(22) Date of filing: 03.01.2023
(51) Int. Cl.: H04M 1/02, B32B 3/30, B32B 7/12, B32B 9/00, B32B 9/04, B32B 27/36, C09J 7/29, B32B 17/10

(54) **ELECTRONIC DEVICE**
ELEKTRONISCHE VORRICHTUNG
DISPOSITIF ÉLECTRONIQUE

(30) Priority: 13.01.2022 CN 202220085313 U
(43) Date of publication of application: 15.11.2023
(73) Proprietor: Honor Device Co., Ltd., Shenzhen, Guangdong 518040 (CN)
(72) Inventor: DING, Ke, Shenzhen, Guangdong 518040 (CN)
(74) Representative: Isarpatent
(86) International application number: PCT/CN2023/070063
(87) International publication number: WO 2023/134495

(56) References cited:
- WO-A1-2007/085708
- CN-A- 111 704 869
- CN-A- 111 704 869
- CN-U- 206 244 703
- CN-U- 206 244 703
- CN-U- 213 596 199
- CN-U- 217 159 767
- US-A1- 2021 292 611

## Description

### TECHNICAL FIELD

This application relates to the field of communication technologies, and in particular, to an electronic device.

### BACKGROUND

For an electronic device, in order to prevent a non-metallic battery cover from breaking into pieces and flying off under an external force, an anti-shattering film is usually attached inside the battery cover. The anti-shattering film is generally a polyethylene terephthalate (PET) film, which is adhered to an inner surface of the battery cover by using a back adhesive. After a high pressure and debubbling by heating are applied, the anti-shattering film is closely attached on the battery cover. However, when the anti-shattering film is attached on the inner surface of the battery cover, especially for a three-dimensional battery cover (3D battery cover), wrinkles and bubbles are likely to occur because the surface shape changes greatly, which increases the risk of IPX8 waterproof failure of the electronic device. Moreover, when the battery cover is removed for maintenance of the electronic device, the anti-shattering film is easy to be separated from the battery cover, which increases the maintenance cost of the electronic device.

CN 111 704 869 A discloses an explosion-proof film, a cover body and a method for making the same, and a terminal, said explosion-proof film comprising: a base film layer; and an adhesive layer, said adhesive layer being disposed on the surface of said base film layer, said surface of said adhesive layer being a non-flat surface to form a convex-concave exhaust structure.

CN 206 244 703 U discloses an ultra-thin bubble-proof film, including a substrate, a black ink coating, an adhesive, a grid release film.

### SUMMARY

This application provides an electronic device, as defined in the appended set of claims, in which an anti-shattering film is closely attached on a battery cover without wrinkles and bubbles.

An electronic device includes a battery cover. The battery cover includes a battery cover body. An inner surface of the battery cover has an anti-shattering film.

The anti-shattering film includes a plastic substrate. A back adhesive is provided on the plastic substrate. The back adhesive is adhered to the inner surface of the battery cover body. A surface of the back adhesive that is adhered to the inner surface of the battery cover body is provided with an exhaust groove grid.

In this application, the anti-shattering film with the exhaust groove grid on its back adhesive is adhered to the non-metallic battery cover body. When a high pressure such as a 13 kg force and debubbling by heating such as at 50°C are applied, air can be discharged through the exhaust groove grid on the back adhesive, thereby reducing bubbles and wrinkles and lowering the risk of IPX8 waterproof failure of a mobile phone. When the battery cover of the mobile phone is removed for maintenance, the anti-shattering film fits well and is not easy to fall off, which will not increase the maintenance cost of the mobile phone.

Further, in embodiments of this application, arc-shaped grooves are arranged in the anti-shattering film. The arc-shaped grooves run through the plastic substrate and the back adhesive. When the anti-shattering film is attached on the battery cover body, especially at positions with a greater change of the surface shape such as sides and corners of the 3D battery cover, the arc-shaped grooves and the exhaust groove grid on the back adhesive help to remove bubbles, thereby reducing bubbles and wrinkles on the surface of the battery cover after the anti-shattering film is attached, and improving the safety and use performances of the mobile phone.

In a specific implementation of this application, the arc-shaped grooves include a first straight groove, a circular arc-shaped groove, and a second straight groove in communication with each other. The circular arc-shaped groove is arranged on a corner of the anti-shattering film, and the first straight groove and the second straight groove are respectively arranged on one of two sides forming the corner. The structural design of the arc-shaped grooves not only facilitates bubble removing, but also does not affect subsequent CNC formation of camera and epitaxial sprue holes on the battery cover.

It should be understood that descriptions of technical features, technical solutions, beneficial effects or the like in this application do not imply that all features and advantages can be achieved in any single embodiment. On the contrary, it can be understood that descriptions of features or beneficial effects mean that a particular technical feature, technical solution, or beneficial effect is included in at least one embodiment. Therefore, descriptions of the technical features, technical solutions, or beneficial effects in this specification do not necessarily refer to a same embodiment. Further, the technical features, technical solutions, and beneficial effects described in the embodiments may be combined in any suitable manner. A person skilled in the art will understand that the embodiments can be implemented without one or more particular technical features, technical solutions, or beneficial effects of a particular embodiment. In other embodiments, additional technical features and beneficial effects may be further identified in a particular embodiment that does not embody all embodiments.

### BRIEF DESCRIPTION OF DRAWINGS

FIG. 1 is a schematic diagram of a three-dimensional structure of a mobile phone according to an embodiment of this application;
FIG. 2 is a top view of a mobile phone according to an embodiment of this application;
FIG. 3 is a schematic structural diagram of the A-A surface shown in FIG. 2;
FIG. 4 is a schematic exploded view of a structure of a battery cover according to an embodiment of this application;
FIG. 5 is a schematic diagram of a stacked structure of a battery cover according to an embodiment of this application;
FIG. 6 is a top view of a battery cover according to an embodiment of this application;
FIG. 7 is a schematic exploded view of a structure of a battery cover according to a second embodiment of this application;
FIG. 8 is a top view of a battery cover according to a second embodiment of this application;
FIG. 9 is a top view of an anti-shattering film according to an embodiment of this application; and
FIG. 10 is a schematic diagram of a stacked structure of an anti-shattering film according to an embodiment of this application.

### DESCRIPTION OF EMBODIMENTS

The following clearly and completely describes technical solutions in embodiments of this application with reference to the accompanying drawings in the embodiments of this application. Terms used in the following embodiments are only intended to describe particular embodiments, and are not intended to limit this application. As used in this specification and the claims of this application, a singular expression form, "a/an", "one", "the", "foregoing", "said", or "this", is intended to also include "one or more" expression form, unless clearly otherwise indicated in the context. It should be further understood that, in the following embodiments of this application, "at least one" and "one or more" means one, two or more.

Reference to "one embodiment" or "some embodiments" described in this specification means that a specific characteristic, structure or feature described in combination with this embodiment is included in one or more embodiments of this application. Therefore, the statements "in one embodiment", "in some embodiments", "in some other embodiments", "in other embodiments", and the like in different parts of this specification do not necessarily refer to the same embodiment, but mean "one or more but not all embodiments", unless otherwise specially emphasized in other ways. The terms "include", "contain", "have" and their variations mean "including but not limited to", unless otherwise specially emphasized in other ways.

"A plurality of" involved in the embodiments of this application refers to two or more. It should be noted that in descriptions of the embodiments of this application, terms such as "first" and "second" are merely used for distinguishing descriptions, and cannot be understood as an indication or implication of relative importance, or an indication or implication of a sequence.

In the embodiments of this application, the word "exemplary" or "for example" is used to represent an example, an illustration, or a description. Any embodiment or design scheme described as "exemplary" or "for example" in the embodiments of this application should not be explained as being more preferred or having more advantages than another embodiment or design scheme. In particular, the terms such as "exemplary" and "example" as used herein are intended to present the related concepts in a specific manner.

In embodiments of this application, a mobile phone is illustrated as an example. It can be understood that the electronic device in this application may be any device with communication and storage functions, such as a smart phone, a cellular phone, a cordless phone, a session initiation protocol (Session Initiation Protocol, SIP) phone, a tablet computer, a personal digital assistant (Personal Digital Assistant, PAD), a notebook computer, a digital camera, an e-book reader, a portable multimedia player, a handheld device with a wireless communication function, a computing device or another processing device connected to a wireless modem, an in-vehicle device, a wearable device, and a 5G terminal device, which is not limited in the embodiments of this application.

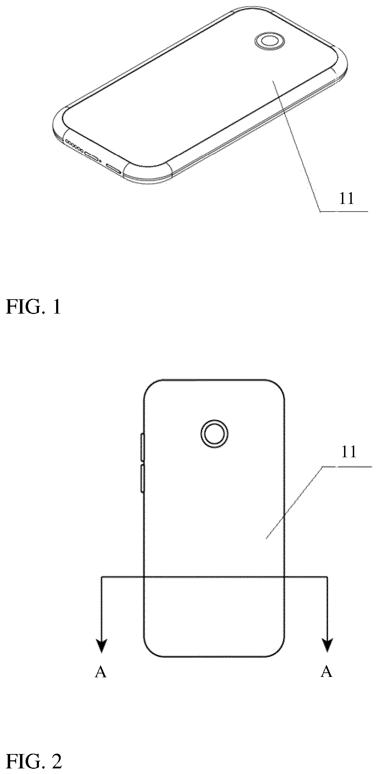

Refer to FIG. 1 and FIG. 2. FIG. 1 is a schematic diagram of a three-dimensional structure of a mobile phone according to an embodiment of this application, and FIG. 2 is a top view of a mobile phone according to an embodiment of this application. The mobile phone includes a battery cover 11, a middle frame (not shown), and a screen (not shown). The battery cover 11 is connected with the screen to form a space for accommodating components such as a mainboard, a memory and a power source.

If the main material of the battery cover 11 is a non-metallic material, such as a ceramic material or a glass material, under the action of an external force, the battery cover 11 is likely to break into pieces which will fly off and even cause injury of a user. Therefore, it is necessary to attach an anti-shattering film on an inner surface of the main material. For a 3D battery cover, on the sides of this structure, especially at four corners, the anti-shattering film is susceptible to wrinkles, bubbles, and the like, which will affect the waterproof performance and use performance of the mobile phone.

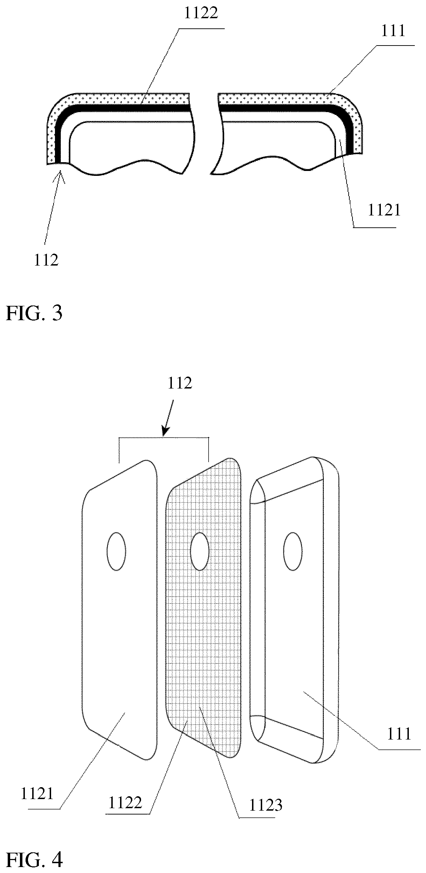

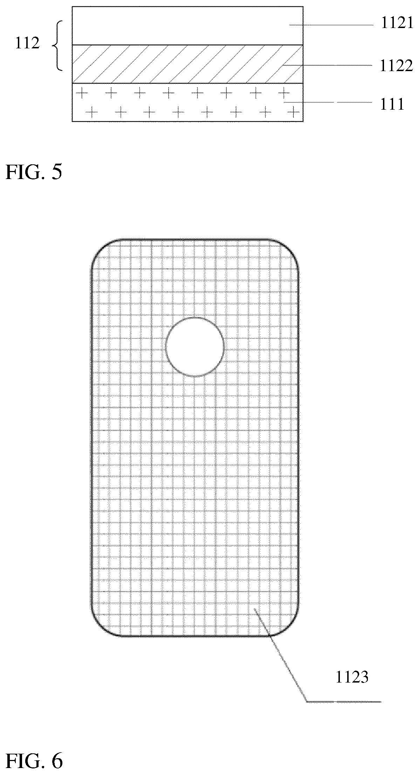

Refer to FIG. 3 and FIG. 4. FIG. 3 is a schematic structural diagram of the A-A surface shown in FIG. 2, and FIG. 4 is a schematic exploded view of a structure of a battery cover according to an embodiment of this application. In this embodiment, the battery cover 11 includes a battery cover body 111 and an anti-shattering film 112 attached on an inner surface of the battery cover body 111. Refer to FIG. 5. FIG. 5 is a schematic diagram of a stacked structure of a battery cover according to an embodiment of this application. The anti-shattering film 112 includes a plastic substrate 1121 and a back adhesive 1122. The surface of the back adhesive 1122 that is attached on the battery cover body 111 is provided with an exhaust groove grid 1123.

The battery cover body 111 is made of ceramic or glass. The battery cover body 111 has sides to form an accommodating space.

The anti-shattering film 112 includes the plastic substrate 1121 and the back adhesive 1122. As the main structure of the anti-shattering film, the plastic substrate 1121 may be a PET film, particularly a transparent PET film.

The plastic substrate 1121 is adhered to the inner surface of the battery cover body 111 by using the back adhesive 1122. The surface of the back adhesive 1122 that is attached on the battery cover body 111 is provided with the exhaust groove grid 1123, as shown in FIG. 6. FIG. 6 is a top view of a battery cover according to an embodiment of this application. The exhaust groove grid 1123 functions to prevent wrinkles and bubbles when the anti-shattering film 112 is attached on the battery cover body 111. The back adhesive 1122 may be an Optically Clear Adhesive (OCA). The surface of the OCA that is attached on the battery cover body 111 is provided with the exhaust groove grid 1123. Under the condition of high pressure and debubbling by heating, the plastic substrate 1121 is adhered to the inner surface of the battery cover body 111 by using the OCA. Further, the back adhesive 1122 may be a transparent OCA.

If the back adhesive 1122 and the plastic substrate 1121 are both made of transparent materials, they can be fully inspected visually after fitting, so as to effectively intercept defective products.

In this application, the anti-shattering film with the exhaust groove grid on its back adhesive is attached to the non-metallic battery cover body. When a high pressure such as a 13 kg force and debubbling by heating such as at 50°C are applied, air can be discharged through the exhaust groove grid on the back adhesive, thereby reducing bubbles and wrinkles and lowering the risk of the IPX8 waterproof failure of the mobile phone. When the battery cover of the mobile phone is removed for maintenance, the anti-shattering film fits well and is not easy to fall off, which will not increase the maintenance cost of the mobile phone.

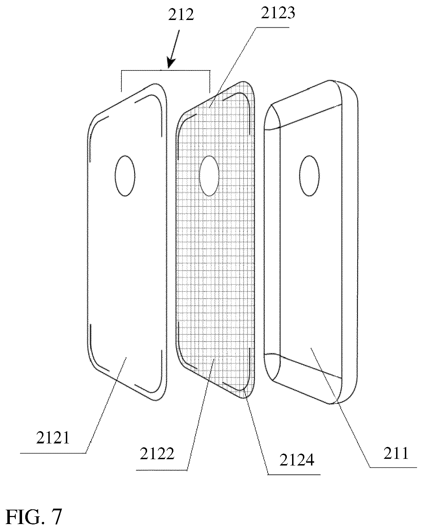

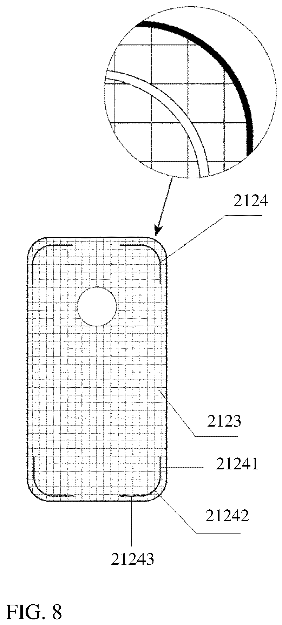

At positions of the sides and four corners of the battery cover body, there is a greater change of the surface shape. Especially for a ceramic battery cover which is hard, the change of the surface shape is +0.25/-0.15, more prone to bubbles and wrinkles. Based on above embodiments of this application, the anti-shattering film is further provided with arc-shaped grooves. Refer to FIG. 7 and FIG. 8. FIG. 7 is a schematic exploded view of a structure of a battery cover according to a second embodiment of this application, and FIG. 8 is a top view of a battery cover according to a second embodiment of this application.

According to the second embodiment of this application, the battery cover includes a battery cover body 211 and an anti-shattering film 212. The anti-shattering film 212 includes a back adhesive 2122 and a plastic substrate 2121. The battery cover body 211 is similar to the battery cover body 111 described above, and details are not described herein again. The battery cover in this embodiment differs from the battery cover described above in that arc-shaped grooves 2124 are arranged in the anti-shattering film 212, and the arc-shaped grooves 2124 run through the plastic substrate 2121 and the back adhesive 2122.

In this embodiment, the anti-shattering film 212 is provided with four arc-shaped grooves 2124, each on one of four corners of the anti-shattering film 212 to conform to the radian of each of the four corners of the anti-shattering film 212. In other embodiments, the anti-shattering film 212 may be provided with only two arc-shaped grooves 2124, which may be arranged at any two opposite corners of the anti-shattering film.

In this embodiment, the arc-shaped grooves 2124 include a first straight groove 21241, a circular arc-shaped groove 21242, and a second straight groove 21243 in communication with each other. The circular arc-shaped groove 21242 is arranged at a corner of the anti-shattering film, and the first straight groove 21241 and the second straight groove 21243 are respectively arranged on one of two sides forming the corner.

In this embodiment, the width of the arc-shaped grooves 2124 is ≥0.5 mm.

In this embodiment, the radius of the circular arc-shaped groove 21242 is ≥2 mm.

This application uses the anti-shattering film with the exhaust groove grid on its back adhesive. Further, arc-shaped grooves are arranged at corners of the anti-shattering film so that the anti-shattering film is attached on the non-metallic battery cover body. When a high pressure such as a 13 kg force and debubbling by heating such as 50°C are applied, air can be discharged through the exhaust groove grid on the back adhesive and the arc-shaped grooves on the anti-shattering film, thereby reducing bubbles and wrinkles on the battery cover, especially at positions such as the sides and corners where the surface shape changes greatly, and lowering the risk of the IPX8 waterproof failure of the mobile phone. When the battery cover of the mobile phone is removed for maintenance, the anti-shattering film fits well and is not easy to fall off, which will not increase the maintenance cost of the mobile phone.

In addition, the plastic substrate and the back adhesive in the anti-shattering film are made of transparent materials. After attachment, the product presents a grid shape and can be fully inspected visually, thereby effectively intercepting defective products.

In this application, the anti-shattering film is attached on the battery cover body to form a battery cover with the anti-shattering function. In particular, before attachment, the anti-shattering film includes: a plastic substrate; a back adhesive; a release film; and a positioning film.

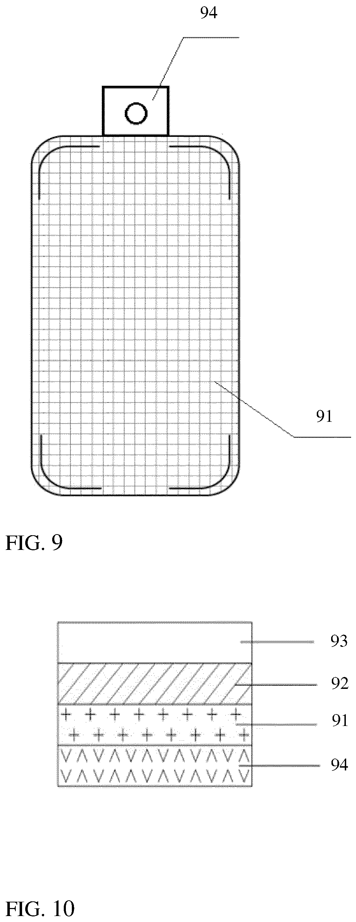

Refer to FIG. 9 and FIG. 10. FIG. 9 is a top view of an anti-shattering film according to an embodiment of this application, and FIG. 10 is a schematic diagram of a stacked structure of an anti-shattering film according to an embodiment of this application, where the plastic substrate is denoted as 91, the back adhesive is denoted as 92, the release film is denoted as 93, and the positioning film is denoted as 94.

The plastic substrate 91 is the main structure of the anti-shattering film. The back adhesive 92 is composited onto the plastic substrate 91 to adhere the plastic substrate 91 to the battery cover body. The release film 93 is composited onto the back adhesive 92 to protect the back adhesive 92 before use. The positioning film 94 is composited onto the plastic substrate 91 to position the anti-shattering film so that the anti-shattering film is attached on the battery cover body more precisely.

In this embodiment of this application, the surface of the release film 93 that is attached on the back adhesive 92 is provided with a grid that matches the exhaust groove grid on the back adhesive 92. That is, the projections in the grid on the release film 93 correspond to the depressions (grooves) in the exhaust groove grid on the back adhesive 92, and the depressions in the grid on the release film 93 correspond to the depressions in the exhaust groove grid on the back adhesive 92, so that the release film 93 is closely attached on the back adhesive 92.

In this embodiment of this application, the positioning film 94 may be 60 µm thick or less. The positioning film with a thickness greater than 60 µm is harder, which makes the attachment on curved surfaces more difficult. For example, bubbles and wrinkles at positions of the sides and corners of the battery cover body are likely to occur during attachment.

Accordingly, in another embodiment, arc-shaped grooves are arranged in the anti-shattering film as well. The arc-shaped grooves run through the plastic substrate 91 and the back adhesive 92, which facilitate air discharge in subsequent attaching.

When the anti-shattering film of this application is in use, the release film 93 is first removed. Then, under the action of the positioning film 94, the anti-shattering film is attached on the battery cover body. The positioning film 94 is removed, and debubbling at a high temperature and high pressure (such as a 13 kg force and 50°C) is applied. The plastic substrate 91 is adhered to the battery cover body by using the back adhesive 92. After that, the battery cover is processed, for example, precision machining is performed under computer numerical control (CNC) to produce hole positions for the camera. In the above debubbling process, air is discharged through the exhaust groove grid on the back adhesive and the arc-shaped grooves on the anti-shattering film, thereby reducing bubbles and wrinkles on the finished product, and effectively improving the air-tight yield and safety of the whole machine. Meanwhile, when the battery cover is removed for maintenance, the anti-shattering film fits well and is not easy to fall off, which will not increase the maintenance cost of the whole machine.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be determined by the protection scope of the claims.

## Claims

1. An electronic device, comprising a battery cover (11), wherein the battery cover (11) comprises a battery cover body (111);
an inner surface of the battery cover body (111) has an anti-shattering film (112); and
the anti-shattering film (112) comprises a plastic substrate (1121), a back adhesive (1122) is provided on the plastic substrate (1121), and the back adhesive (1122) is adhered to the inner surface of the battery cover body (111); a surface of the back adhesive (1122) that is adhered to the inner surface of the battery cover body (111) is provided with an exhaust groove grid (1123),
wherein the electronic device further comprises: arc-shaped grooves (2124) on the anti-shattering film (112), the arc-shaped grooves (2124) running through the plastic substrate (1121) and the back adhesive (1122),
wherein the number of the arc-shaped grooves (2124) is two, each arranged on one of two opposite corners of the anti-shattering film (112), or
wherein the number of the arc-shaped grooves (2124) is four, each arranged on a corner of the anti-shattering film (112).

2. The electronic device according to claim 1, wherein the arc-shaped grooves comprise a first straight groove, a circular arc-shaped groove, and a second straight groove in communication with each other, the circular arc-shaped groove is arranged at a corner of the anti-shattering film, and the first straight groove and the second straight groove are respectively arranged on one of two sides forming the corner.

3. The electronic device according to claim 2, wherein the radius of the circular arc-shaped groove is ≥2 mm.

4. The electronic device according to claim 2, wherein the width of the arc-shaped grooves is ≥0.5 mm.

5. The electronic device according to any one of claims 1 to 4, wherein the battery cover is a 3D battery cover.

6. The electronic device according to any one of claims 1 to 4, wherein the battery cover body is a ceramic battery cover body or a glass battery cover body.

7. The electronic device according to any one of claims 1 to 4, wherein the plastic substrate is a polyethylene terephthalate, PET film.

8. The electronic device according to claim 7, wherein the PET film is a transparent PET film.

9. The electronic device according to any one of claims 1 to 4, wherein the back adhesive is an Optically Clear Adhesive, OCA.

10. The electronic device according to any one of claims 1 to 4, wherein the electronic device is a smart phone.

## Patentansprüche

1. Eine elektronische Vorrichtung, umfassend eine Batteriefachabdeckung (11), wobei die Batteriefachabdeckung (11) einen Batteriefachabdeckkörper (111) umfasst;
eine innere Oberfläche des Batteriefachabdeckkörpers (111) weist eine Splitterschutzfolie (112) auf; und
die Splitterschutzfolie (112) umfasst ein Kunststoffsubstrat (1121), eine Rückseitenhaftung (1122) ist auf dem Kunststoffsubstrat (1121) angebracht, und die Rückseitenhaftung (1122) ist an der inneren Oberfläche des Batteriefachabdeckkörpers (111) befestigt; eine Oberfläche der Rückseitenhaftung (1122), die an der inneren Oberfläche des Batteriefachabdeckkörpers (111) befestigt ist, ist mit einem Entlüftungsrillenraster (1123) versehen,
wobei die elektronische Vorrichtung ferner: bogenförmige Rillen (2124) auf der Splitterschutzfolie (112) umfasst, wobei die bogenförmigen Rillen (2124) durch das Kunststoffsubstrat (1121) und die Rückseitenhaftung (1122) verlaufen,
wobei die Anzahl der bogenförmigen Rillen (2124) zwei beträgt und jeweils an einer der beiden gegenüberliegenden Ecken der Splitterschutzfolie (112) angeordnet ist, oder
wobei die Anzahl der bogenförmigen Rillen (2124) vier beträgt und jeweils an einer Ecke der Splitterschutzfolie (112) angeordnet ist.

2. Die elektronische Vorrichtung gemäß Anspruch 1, wobei die bogenförmigen Rillen eine erste gerade Rille, eine kreisbogenförmige Rille und eine zweite gerade Rille umfassen, die miteinander verbunden sind, wobei die kreisbogenförmige Rille an einer Ecke der Splitterschutzfolie angeordnet ist und die erste gerade Rille sowie die zweite gerade Rille jeweils an einer der beiden die Ecke bildenden Seiten angeordnet sind.

3. Die elektronische Vorrichtung gemäß Anspruch 2, wobei der Radius der kreisbogenförmigen Rille ≥2 mm beträgt.

4. Die elektronische Vorrichtung gemäß Anspruch 2, wobei die Breite der bogenförmigen Rillen ≥0,5 mm beträgt.

5. Die elektronische Vorrichtung gemäß einem der Ansprüche 1 bis 4, wobei die Batteriefachabdeckung eine 3D-Batteriefachabdeckung ist.

6. Die elektronische Vorrichtung gemäß einem der Ansprüche 1 bis 4, wobei der Batteriefachabdeckkörper ein keramischer Batteriefachabdeckkörper oder ein Glas-Batteriefachabdeckkörper ist.

7. Die elektronische Vorrichtung gemäß einem der Ansprüche 1 bis 4, wobei das Kunststoffsubstrat eine Polyethylenterephthalat-, PET-Folie ist.

8. Die elektronische Vorrichtung gemäß Anspruch 7, wobei die PET-Folie eine transparente PET-Folie ist.

9. Die elektronische Vorrichtung gemäß einem der Ansprüche 1 bis 4, wobei die Rückseitenhaftung ein optisch klares Klebemittel (OCA, Optically Clear Adhesive) ist.

10. Die elektronische Vorrichtung gemäß einem der Ansprüche 1 bis **4,** wobei die elektronische Vorrichtung ein Smartphone ist.

## Revendications

1. Un dispositif électronique, comprenant un couvercle de batterie (11), ledit couvercle (11) comprenant un corps de couvercle de batterie (111) ;
une surface interne du corps de couvercle de batterie (111) comporte un film antichoc (112) ; et
le film antichoc (112) comprend un substrat plastique (1121), une colle arrière (1122) est disposée sur le substrat plastique (1121), et ladite colle arrière (1122) est collée à la surface interne du corps de couvercle de batterie (111) ; une surface de la colle arrière (1122) collée à la surface interne du corps de couvercle de batterie (111) est pourvue d'une grille de rainures d'évacuation (1123),
où le dispositif électronique comprend en outre : des rainures en arc (2124) sur le film antichoc (112), les rainures en arc (2124) traversant le substrat plastique (1121) et la colle arrière (1122),
où le nombre de rainures en arc (2124) est de deux, chaque rainure étant disposée sur l'un des deux coins opposés du film antichoc (112), ou
où le nombre de rainures en arc (2124) est de quatre, chaque rainure étant disposée sur un coin du film antichoc (112).

2. Dispositif électronique selon la revendication 1, dans lequel les rainures en arc comprennent une première rainure droite, une rainure courbe en arc et une deuxième rainure droite, mises en communication ; la rainure courbe en arc est disposée à un coin du film antichoc, et la première et la deuxième rainure droite sont respectivement disposées sur deux côtés formant le coin.

3. Dispositif électronique selon la revendication 2, dans lequel le rayon de la rainure courbe en arc est ≥2 mm.

4. Dispositif électronique selon la revendication 2, dans lequel la largeur des rainures en arc est ≥0,5 mm.

5. Dispositif électronique selon l'une quelconque des revendications 1 à 4, dans lequel le couvercle de batterie est un couvercle de batterie 3D.

6. Dispositif électronique selon l'une quelconque des revendications 1 à 4, dans lequel le corps de couvercle de batterie est un corps de couvercle de batterie en céramique ou en verre.

7. Dispositif électronique selon l'une quelconque des revendications 1 à 4, dans lequel le substrat plastique est constitué de polyéthylène téréphtalate, film PET.

8. Dispositif électronique selon la revendication 7, dans lequel le film PET est un film PET transparent.

9. Dispositif électronique selon l'une quelconque des revendications 1 à 4, dans lequel la colle arrière est une colle optiquement transparente, OCA.

10. Dispositif électronique selon l'une quelconque des revendications 1 à 4, dans lequel le dispositif électronique est un smartphone.
